# EUROPÄISCHE PATENTSCHRIFT

(11) **EP 1 249 186 B1**
(45) Veröffentlichungstag und Bekanntmachung des Hinweises auf die Patenterteilung: **22.12.2004**
(21) Anmeldenummer: 02001650.7
(22) Anmeldetag: 24.01.2002
(51) Int. Cl.: A43B 23/17, A43B 7/32, B29D 31/518

(54) **Schutzschuh, Sicherheitsschuh bzw. -stiefel**
Protective shoe, safety shoe or boot, provided with a protective toe cap
Chaussure de sécurité, chaussure ou botte protectrice, pourvue d'un embout protecteur

(30) Priorität: 11.04.2001 DE 20106350 U
(43) Veröffentlichungstag der Anmeldung: 16.10.2002
(73) Patentinhaber: Uvex Arbeitsschutz GmbH, 90766 Fürth (DE)
(72) Erfinder: Herrmann, Herbert, 86736 Auhausen (DE); Fumy, Richard, 91315 Höchstadt (DE)
(74) Vertreter: Schneck, Herbert, Dipl.-Phys., Dr.

(56) Entgegenhaltungen:
- EP-A- 0 191 623
- EP-A- 0 239 313
- WO-A-97/22471
- WO-A-98/48999
- WO-A-99/15042
- US-A- 4 257 177

## Beschreibung

Die Erfindung richtet sich auf ein Verfahren zur Herstellung einer Zehenkappe eines Schutzschuhs, Sicherheitsschuhs bzw. -stiefels, insbesondere eines Arbeitsschutzschuhs, mit einer Zehenkappe aus Kunststoff.

Die Zehenkappen für derartige Schuhe wurden herkömmlicherweise aus Stahl gefertigt. Mit diesem Material läßt sich zwar eine hohe Festigkeit erreichen, jedoch ist das Gewicht relativ hoch und die gute Wärmeleitfähigkeit fördert ein Kälteempfinden im Zehenbereich beim Tragen des Schuhs.

Man hat deshalb zur Vermeidung dieser Nachteile und zur Erzielung einer kostengünstigen Herstellbarkeit Zehenkappen aus Kunststoff entwickelt, wie sie beispielsweise in WO 98/48999 beschrieben werden.

US-A-4 257 177 offenbart die Merkmale des Oberbegriffs des Anspruchs 1.

Zur Erzielung einer hinreichenden Festigkeit, wie sie von den Normen gefordert wird, z.B. einer Stoßfestigkeit von mindestens 200 J und einer Widerstandsfähigkeit von 15 KN, wurden herkömmlicherweise verwendete Kunststoffe mit Glasfasern oder anderen Materialien verstärkt.

Hiervon ausgehend liegt der Erfindung die Aufgabe zugrunde, insbesondere Arbeitsschutzschuhe mit einer Zehenkappe aus Kunststoff so weiterzuentwickeln, daß bei kostengünstiger Herstellbarkeit ein die Normanforderungen übersteigendes hohes Maß an Sicherheit bei großem Tragekomfort erzielt wird. Diese Aufgabe wird erfindungsgemäß durch die Merkmale des Auspruchs 1 gelöst. Die Innenseite und/oder die Außenseite der Zehenkappe ist mit einem weicheren Kunststoff umspritzt. Ein derartiger weicherer Kunststoff an der Außenseite, wo das Oberleder anliegt, sorgt dafür, daß dieses Oberleder bei Relativbewegungen zwischen Zehenkappe und Lederinnenseite nicht wie bei herkömmlichen Arbeitsschutzschuhen strapaziert und beschädigt wird. Der weiche Überzug an der Innenseite schafft für den Benutzer ein angenehmes, körperfreundliches Gefühl und eine Abpolsterung.

Vorzugsweise besteht die Zehenkappe aus Polycarbonatblend, insbesondere von PC/PBT-Blend, und der weiche Überzug aus thermoplastischem Polyurethan oder thermoplastischem Elastomer.

Eine besonders vorteilhafte Ausführungsform sieht vor, daß der weiche innere und äußere Überzug die Oberkante und/oder die Unterkante des härteren Grundmaterials unter Ausbildung einer weichen Lippe überragt. Durch eine derartige weiche Lippe wird die Kante des härteren Materials abgepolstert und ein weicher, fließender Übergang zur Sohle bzw. zur Innenseite des Oberleders geschaffen.

Im Rahmen der Erfindung kann vorgesehen sein, daß die Oberkante der Zehenkappe der anatomischen Form des Leistenrists folgend nach oben gewölbt ist. Ebenso kann im Sinne einer anatomischen Anpassung eine Ausbauchung bzw. Abrundung nach außen der seitlichen Abschnitte der Fersenkappe vorgesehen sein.

Erfindungsgemäß ist vorgesehen, daß die Zehenkappe im Zwei-Komponenten-Spritzguß derart hergestellt ist, daß in eine einzige Formausnehmung zunächst das weiche Überzugsmaterial und dann das den tragenden Grundkörper ausbildende härtere Material eingespritzt wird. Es handelt sich also um eine sogenannte Mono-Sandwich-Technik. Bei dieser Herstellungstechnik bildet sich keine scharf definierte Ober- bzw. Unterkante im Sinne einer streng linearen Begrenzung aus, sondern die Kanten werden einfach durch das vordere Ende des Materialflusses des härteren Kunststoffes gebildet.

Nachfolgend wird die Erfindung anhand eines bevorzugten Ausführungsbeispiels in Verbindung mit der Zeichnung näher erläutert. Es zeigen:

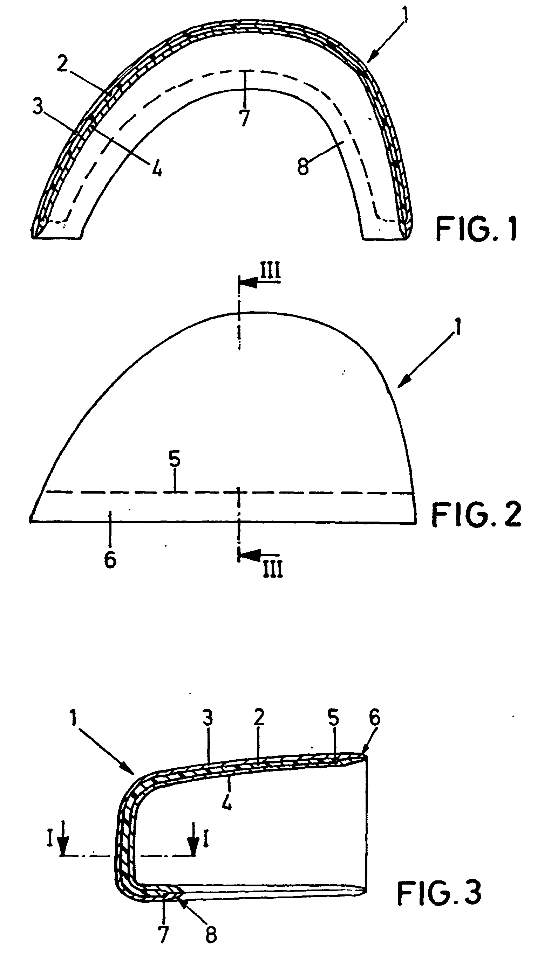

- Fig. 1: einen horizontalen Schnitt längs der Schnittlinie I-I in Fig. 3 der Zehenkappe eines erfindungsgemäßen Schuhs,
- Fig. 2: eine Draufsicht auf die Zehenkappe und
- Fig. 3: einen vertikalen Längsschnitt längs der Linie III-III in Fig. 2.

Eine in der Zeichnung dargestellte Zehenkappe 1 umfaßt einen aus einem vergleichsweise harten Kunststoff, wie PC/PBT-Blend, bestehenden Grundkörper 2 und einen äußeren Überzug 3 und einen inneren Überzug 4 aus einem vergleichsweise weichen Kunststoff, wie thermoplastischem Polyurethan.

Der äußere Überzug 3 und der innere Überzug 4 verbinden sich im Bereich der oberen Endkante 5 des Grundkörpers 2 unter Ausbildung einer weichen horizontalen Lippe 6 und im Bereich der unteren Endkante 7 unter Ausbildung einer weichen horizontalen Lippe 8.

## Patentansprüche

1. Verfahren zur Herstellung einer Zehenkappe eines Schutzschuhs, Sicherheitsschuhs bzw. -stiefels in Spritzgusstechnik mit einer Zehenkappe (1) aus Kunststoff, insbesondere eines Arbeitsschutzschuhs, wobei die Innenseite und/oder die Außenseite der Zehenkappe (1) mit einem weicheren Kunststoff umspritzt ist, wobei sich an die Endkante (7) des Grundkörpers (2) der Zehenkappe (1) eine horizontale Lippe (8) aus einem weicheren Kunststoff anschließt,
**dadurch gekennzeichnet, dass** die Zehenkappe (1) im Zwei-Komponenten-Spritzguss derart hergestellt ist, dass in eine einzige Formausnehmung zunächst das weiche Überzugsmaterial und dann das den tragenden Grundkörper (2) ausbildende härtere Material eingespritzt wird.

2. Verfahren nach Anspruch 1, **dadurch gekennzeichnet, daß** die Zehenkappe (1) aus einem Polycarbonatblend, insbesondere einem PC/PBT-Blend besteht.

3. Verfahren nach Anspruch 2, **dadurch gekennzeichnet, daß** der weiche Überzug (3; 4) aus thermoplastischen Polyurethan oder thermoplastischen Elastomer besteht.

4. Verfahren nach Anspruch 1, **dadurch gekennzeichnet, daß** der weiche innere (4) und äußere Überzug (3) die Oberkante (5) und/oder die Unterkante (7) des härteren Grundmaterials unter Ausbildung einer weichen Lippe (6; 8) überragt.

## Claims

1. A method of manufacturing a toe cap of protective shoes, safety shoes or boots, by injection molding, comprising a toe cap (1) of plastics, in particular of industrial safety shoes, the inside and/or outside of the toe cap (1) being coated with softer plastics by injection molding, the edge (7) of the principal unit (2) of the toe cap (1) being adjoined by a horizontal lip (8) of softer plastics,
**characterized in that** the toe cap (1) is manufactured by sandwich molding in such a way that the soft coating material is first injected into a single mold recess and that then the harder material is injected, constituting the supporting, principal unit (2).

2. A method according to claim 1, **characterized in that** the toe cap (1) consists of a polycarbonate blend, in particular a PC/PBT blend.

3. A method according to claim 2, **characterized in that** the soft coating (3; 4) consists of thermoplastic polyurethane or thermoplastic elastomer.

4. A method according to claim 1, **characterized in that** the soft internal (4) and external coating (3) laps over the top edge (5) and/or the bottom edge (7) of the harder principal material, forming a soft lip (6; 8).

## Revendications

1. Procédé de fabrication d'un embout protecteur d'une chaussure de protection, chaussure ou botte de sécurité par la technique de moulage par injection, avec un embout protecteur (1) en matière plastique, en particulier une chaussure de sécurité de travail, une matière plastique plus souple étant injectée autour de la face intérieure et/ou la face extérieure de l'embout protecteur (1), une lèvre horizontale (8) en matière plastique plus souple prolongeant le bord d'extrémité (7) du corps de base (2) de l'embout protecteur (1), **caractérisé en ce que** l'embout protecteur (1) a été réalisé par moulage par injection de deux composants, **en ce que** l'on injecte d'abord le matériau de revêtement souple dans une seule cavité de moulage et ensuite l'on injecte le matériau plus dur formant le corps de base (2) support.

2. Procédé selon la revendication 1, **caractérisé en ce que** l'embout protecteur (1) est réalisé dans un mélange à base de polycarbonate, en particulier un mélange de PC/PBT.

3. Procédé selon la revendication 2, **caractérisé en ce que** le revêtement souple (3 ; 4) est réalisé en polyuréthanne thermoplastique ou en élastomère thermoplastique.

4. Procédé selon la revendication 1, **caractérisé en ce que** le revêtement souple intérieur (4) et extérieur (3) s'avance au-delà du bord supérieur (5) et/ou du bord inférieur (7) du matériau de base plus dur en formant une lèvre (6 ; 8) souple.
